# EUROPEAN PATENT APPLICATION

(11) **EP 3 163 392 A1**
(43) Date of publication of application: **03.05.2017**
(21) Application number: 15811081.7
(22) Date of filing: 20.05.2015
(51) Int. Cl.: G05B 19/418, G06Q 10/06, G06Q 50/04

(54) **INFORMATION PROCESSING DEVICE AND PROGRAM**

(30) Priority: 25.06.2014 JP 2014129925
(71) Applicant: Kabuku Inc., Tokyo 150-0002 (JP)
(72) Inventor: INADA, Masahiko, Miura-gun Kanagawa 240-0111 (JP); ADACHI, Akihiko, Tokyo 150-0013 (JP)
(74) Representative: Serjeants LLP
(86) International application number: PCT/JP2015/064486
(87) International publication number: WO 2015/198759

(57) **Abstract**

PROBLEM TO BE SOLVED: To provide a mechanism capable of selecting an appropriate processing apparatus from a plurality of candidates according to design information.

SOLUTION: An information processing apparatus includes: an input unit that receives inputs of design information; a storage unit that stores attribute information for multiple processing devices; an acquisition unit that acquires operating information indicating the operating state of the multiple processing devices; and a selection unit that, on the basis of the design information received by the input unit, the attribute information stored in the storage unit, and the operating information obtained by the acquisition unit, selects a processing device from the multiple processing devices to perform manufacturing based on the design information.

## Description

### TECHNICAL FIELD

The present invention relates to an information processing apparatus and a program.

### BACKGROUND ART

In recent years, in designing various products, a three-dimensional CAD system capable of handling a three-dimensional model is used. For example, when design information such as three-dimensional CAD data or the like is input to a processing apparatus such as a 3D printer, the designed product is manufactured. The designer can perform various designs, and the producer can also possess processing equipment of various specifications. For example, there are cases where the designer and the producer are different from each other, and therefore there is a need for a techn i que to make communication between the designer and the producer easier.

For example, the following Patent Document 1 discloses a technique for estimating a processing cost based on three-dimensional CAD data and materials used for manufactur i ng.

### [Prior Art Document]

### [Patent document]

[Patent Document 1] Japanese Unexamined Patent Publication No. 2013-200818

### SUMMARY OF THE INVENTION

### DISCLOSURE OF THE INVENTION

However, as various kinds of processing apparatuses have become widespread today, the process i ng cost can vary depend i ng on the process i ng apparatus, and i n some cases, depending on the processing apparatus, it may be difficult to manufacture the apparatus with lack of specifications. Further, the time required for manufacturing can be expanded or contracted according to the operating condition of the processing apparatus. Therefore, it is desirable to provide a mechanism capable of selecting an appropriate processing apparatus from a plurality of candidates according to design information.

### SUMMARY OF THE INVENTION

According to one aspect of the present invention, there is provided an information processing apparatus including an input unit that accepts an input of design information, a storage unit that stores attribute information of the plurality of processing apparatuses, a storage unit that stores the plurality of pieces of operation information; and an acquisition unit that acquires the operation information indicated by the operation information acquired by the acquisition unit, based on the design information received by the input unit, the attribute information stored by the storage unit, and a selection unit that selects the process i ng apparatus that performs manufacturing based on the design information from the processing apparatus.

The information processing apparatus according to claim 1, wherein the attribute information includes manufacturing ability information indicating thickness, precision, and size that can be manufactured by the processing apparatus for each material, and the selecting section selects, based on the manufacturing capability information corresponding to the material indicated by the design information, and may select the processing apparatus capable of manufacturing based on the design information.

The design information may include a desired price and a delivery date condition, and the selection unit may preferentially select at least one of a desired price or a delivery date condition included in the design information.

The selecting unit may calculate the structure of the product based on the design information and determine whether or not the structure is capable of manufacturing using the support material.

The information processing apparatus may further include a notifying unit that notifies the estimation information indicating the estimated price and the delivery date in the case where the processing device selected by the selecting unit is manufactured.

The attribute information may include price information including a material cost and a labor cost for each material, and the selection unit may calculate the estimated price based on the price information corresponding to the material indicated by the design information.

According to another aspect of the present invention, there is provided a computer-readable storage medium storing a computer program for causing a computer to funct i on as a computer, the program caus i ng a computer to funct i on as: the operat i on information and the attribute information of at least one of the processing apparatuses are transmitted to the server apparatus so that the server apparatus can select the processing apparatus that performs manufacturing based on the design information from the plurality of processing apparatuses and a receiving unit which receives designation information instructing to perform manufacturing based on the design information from the server device.

### Effect of the Invention

As descr i bed above, accord i ng to the present invention, it is possible to select an appropriate processing apparatus from a plurality of candidates according to design information.

### BRIEF DESCRIPTION OF THE DRAWINGS

FIG. 1 is an explanatory diagram for explaining an out line of a manufactur i ng system according to an embodiment of the present invention.
FIG. 2 is a block diagram showing an example of a logical configuration of a server according to the present embodiment.
FIG. 3 is a block diagram for explaining the internal configuration of an estimation processing unit according to the present embodiment.
FIG. 4 is a block diagram showing an example of a logical configuration of a management apparatus according to the present embodiment.
FIG. 5 is a flowchart showing an example of a manufacturing process by the manufacturing system according to the present embodiment.

### DETAILED DESCRIPTION OF THE INVENTION

DETAILED DESCRIPTION OF THE PREFERRED EMBODIMENTS Preferred embodiments of the present invention will now be described in detail with reference to the accompanying drawings. In the present specification and the drawings, the same reference numerals are given to the constituent elements having substantially the same functional configuration, and redundant explanation will be omitted.

### <1. Overview>

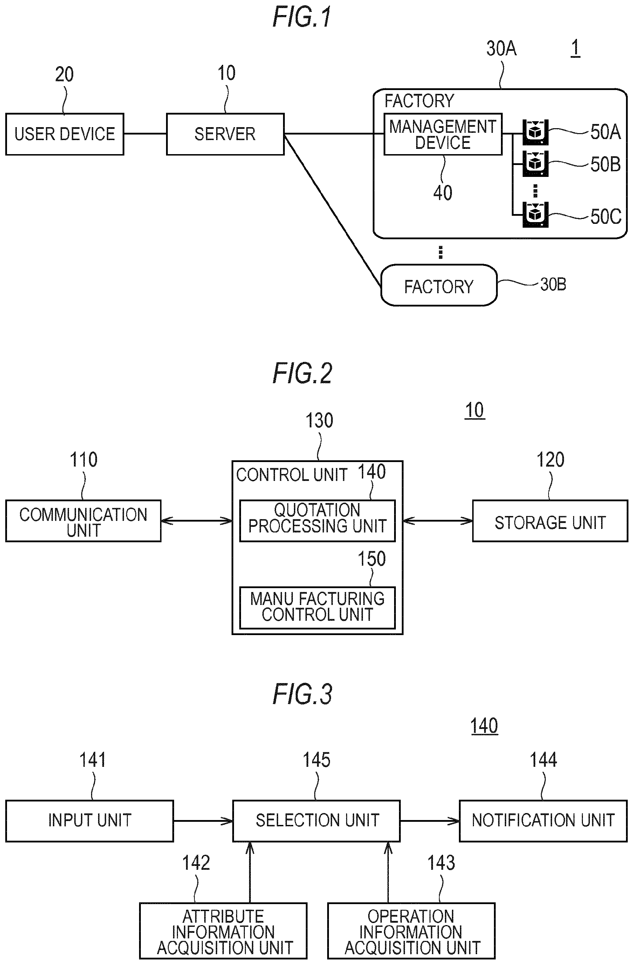

First, with reference to FIG. 1, an outline of a communication system 1 according to one embodiment of the present invention will be described.

FIG. 1 is an explanatory diagram for explaining the out line of a manufactur i ng system 1 according to an embodiment of the present invention. As shown in FIG. 1, the communication system 1 according to the present embodiment includes a server 10, a user device 20, and one or more factories (ie, factories 30A and 30B). Factory 30 A includes a management dev i ce 40 and one or more process i ng devices (ie, process i ng devices 50A, 50B, and 50C). In this specification, when it is unnecessary to d i st i ngu i sh the factor i es 30A and 30B from each other, they are collectively referred to as factor i es 30 by omitting the alphabet at the end of the s i gn. The same applies to other constituent elements (the processing apparatus 50 and the like). Each constituent element of the manufacturing system 1 will be described below.

### (Server 10)

The server 10 is an information processing apparatus that performs matching between a request for product processing from a client and a processing apparatus that performs requested product process i ng. For example, the server 10 rece i ves the des i gn i nformat i on from the user device 20 and selects the processing device 50 that requests the processing based on the design information. Then, the server 10 transmits the processing instruction information to the factory 30 having the selected processing apparatus 50, and controls the processing of the product and the processing of sh i pp i ng the product to the client. The des i gn i nformat i on is information including, for example, data indicating the shape of the product, material to be processed, desired price, delivery date, and the like. The processing instruction information is information including design information and identification information for identifying the processing apparatus 50 that performs processing based on the design information. The data indicating the shape of the product may be, for example, CAD data, CG (computer graphics) data, or the like. The shape indicated by this data may be a two-dimensional shape, a three-dimensional shape, a color, a pattern, or the like may be attached. Processing based on design information means to produce a modeled object having a structure according to, for example, CAD data with a specified material. Processing of a product is also referred to as manufacturing a product in the following.

### (User device 20)

The user dev i ce 20 is a device operated by a user (requester). For example, the user device 20 accepts input of design information from the user and transmits the input design information to the server 10.

### (Factory 30)

The factory 30 is a facility of a processor having one or more processing apparatuses 50.

### (Management device 40)

The management device 40 is a device that manages the processing device 50 in the factory 30. The management apparatus 40 has a communication function and performs data transmission / reception with the server 10. For example, the management device 40 transmits various information of the processing device 50 in the factory 30 to the server 10, controls the processing device 50 so as to perform the instructed processing based on the processing instruction information received from the server 10 I do. In the present description, the management device 40 manages the processing device 50, but the server 10 may have the function of the management device 40 and directly manage the processing device 50.

### (Processing apparatus 50)

The processing apparatus 50 is an apparatus that manufactures products by performing var i ous processing. For example, the process i ng apparatus 50 is realized by a layered manufactur i ng apparatus such as a 3D printer, a cutt i ng apparatus such as a 3D p I otter, an NC processing apparatus performing NC processing (Numerical Control machining), and the like. The processing apparatus 50 performs processing based on the design information output from the management apparatus 40.

The outline of the manufacturing system 1 according to the present embodiment has been described above. Subsequently, a configuration example of the server 10 according to the present embodiment will be described with reference to FIGS. 2 and 3.

### <2. Server configuration example>

FIG. 2 is a block diagram showing an example of a logical configuration of the server 10 according to this embodiment. As shown in FIG. 2, the server 10 includes a communication unit 110, a storage unit 120, and a control unit 130.

### (1) Communication unit 110

The communication unit 110 is a communication module for exchanging data with other devices by wired / wireless communication. The communication unit 110 directly or indirectly communicates with an external device using a LAN (Local Area Network), Wi-Fi (Wireless Fidelity, registered trademark), a telephone line, a broadband network or the like. The communication unit 110 communicates with the user device 20 and the management device 40.

### (2) Storage unit 120

The storage unit 120 is a portion for recording and reproducing data with respect to a predeterm i ned record i ng med i um. The storage unit 120 is realized as, for example, an HDD (Hard Disc Drive). Of course, various types of recording media may be considered, such as a solid-state memory such as a flash memory, a memory card conta i n i ng a f i xed memory, an optical disk, a magneto-optical d i sk, a hologrammemory, etc. As the storage unit 120, recording and reproduction are executed according to the recording medium adopted as long as it can be configured.

For example, the storage unit 120 stores attribute information of a plurality of processing apparatuses 50. The attribute information includes, for example, manufacturing ability i nformat i on for each material of the process i ng apparatus 50. The manufacturing capability information is information indicating the manufacturing ability of the processing apparatus 50 including the thickness (minimum thickness / maximum thickness), precision, size, and the like that can be manufactured by the processing apparatus 50. For example, the thickness may be regarded as the distance until the perpendicular from the surface intersects the other surface, or it may be regarded as the distance between arbitrary two points on the opposing surface, or any other arbitrary It may be caught by standards. Accuracy is the smallest unit that can be processed. Accuracy may be captured, for example, as the minimum controllable length of laminating / not laminating materials in 3D printers, or as the sharpest angle that can be produced. For example, the size may be regarded as the maximum size that the process i ng apparatus 50 can manufacture. Further, the attribute information may include price information including material cost and labor cost for each material. The material cost is the unit price per unit amount, and the labor cost is the price per manufacturing. An example of attribute information is shown in Table 1 below.

**Table 1**

| PROVIDER ID | DEVICE ID | MATERIAL NAME | UNIT PRICE | PERSONNEL EXPENSES | MINIMUM THICKNESS | MAXIMUM THICKNESS | PROCESSING PRECISION | SIZE |
|---|---|---|---|---|---|---|---|---|
| A | X01 | NYLON | 100JPY/cm³ | 1000JPY/1ITEM | 0.7mm | 30.0mm | 0.3mm | 300×400×500 (mm) |
| A | X02 | SILVER | 2000JPY/cm³ | 1500JPY/1ITEM | 1.0mm | 3.0mm | 0.5mm | 150×150×200 |
| B | Y01 | NYLON | 110JPY/cm³ | 1200JPY/1ITEM | 0.7mm | 40.0mm | 0.1mm | 150×200×300 (mm) |
| B | Y02 | POTTERY | 120JPY/cm² | 2000JPY/1ITEM | 1.5mm | 20.0mm | 0.8mm | 100×150×150 (mm) |

As shown in Table 1, the materials that can be manufactured are different for each processing apparatus 50, and among the processing apparatuses 50, the manufacturing ability differs for each material. Note that the provider ID in the table is identification information for identifying a processor having the factory 30, and the device ID is identification information for identifying the processing device 50. In the example shown in Table 1, the unit price of nylon and silver is the price per unit volume, and the unit price of pottery is the price per unit surface area.

### (3) Control unit 130

The control unit 130 functions as an arithmetic processing unit and a control unit, and controls the overall operation in the server 10 according to various programs. The control unit 130 is realized by an electronic circuit such as a CPU (Central Processing Unit), a microprocessor, or the like. Note that the control unit 130 may include a ROM (Read Only Memory) that stores programs to be used, calculation parameters, and the like, and a RAM (Random Access Memory) that temporarily stores appropriately changing parameters and the like. As shown in FIG. 2, the control unit 130 functions as the estimation processing unit 140 and the manufactur ing management unit 150.

### (3-1) Quotation Processing Unit 140

The quotation processing unit 140 judges whether or not the design information received from the user device 20 can be processed to at least one of the plurality of processing devices 50, a function of estimating the price and the delivery date in the case of processing. Hereinafter, the function of the quotation processing unit 140 will be described in detail with reference to FIG. 3.

FIG. 3 is a block diagram for explaining the internal configuration of the quotation processing unit 140 according to the present embodiment. As shown in FIG. 3, the quotation processing unit 140 has functions as an input unit 141, an attribute information acquisition unit 142, an operation information acquisition unit 143, a notification unit 144, and a selection unit 145.

### (Input unit 141)

The input unit 141 has a function of accepting input of design information from the user device 20.

### (Attribute Information Acquisition Unit 142)

The attribute information acquiring unit 142 has a function of acquiring attribute information of the processing device 50. For example, the attribute information acquiring unit 142 refers to the storage unit 120 and acquires attribute information of the plurality of process i ng apparatuses 50. I n add i t i on, the attribute information acquiring unit 142 may acquire attribute information from the processing device 50 via the management device 40.

### (Operation Information Acquisition Unit 143)

The operation information acquisition unit 143 has a function of acquiring operat i on information indicating the operation state of the plurality of processing apparatuses 50. The operation information is, for example, information indicating whether temporal resources, human resources, and the like exist for the processing apparatus 50 to perform processing based on design information, at present or in the future. For example, the operation information is information indicating the current or the most recent empty block of the processing apparatus 50. An example of operation information is shown in Table 2 below.

**Table 2**

| DEVICE ID | OCCUPANCY RATE WITHIN THE NEXT 3 DAYS(%) | OCCUPANCY RATE FOR THE NEXT 4 DAYS To 7 DAYS(%) |
|---|---|---|
| X01 | 95 | 20 |

In the example of Table 2, since the operation state within the next 3 days is 95%, the processing apparatus 50 is in full operation state and it is difficult to accept a new processing case (request). On the other hand, since the operating state within 4 to 7 days is 20%, the processing apparatus 50 is in a state of being empty, and it is possible to accept a new processing case. In Table 2, as an example, the operat i on information is in the operating state for each period, but the technique according to the present invention is not limited to this example. For example, in the 3D printer, the operation information may be information indicating the free area in the area where the material is stacked, per unit time.

Cons i der i ng that the operat i ng status var i es from moment to moment, it is preferable that the operation information acquiring unit 143 acquires the operation information of the processing device 50 in real time via the management device 40. Alternatively, the operation information acquiring unit 143 may store the obtained operation information in the storage unit 120 and refer to or update the information as necessary.

### (Notification unit 144)

The notification unit 144 has a function of notifying the information indicating the selection result by the selection unit 145 described later. For example, the notification unit 144 notifies the estimation information indicating the estimated price and delivery date in the case where the processing device 50 selected by the selection unit 145 performs manufacturing. This estimation information can be generated by the selection unit 145. The notification unit 144 notifies the user device 20 that is the transmission source of the design information. According to this function, the user confirms the price and the delivery date according to the received notification, and changes the design information so as to be cheaper, for example, increases the price so as to be delivered earlier, and sends it to another processing apparatus 50. It is possible to change the request destination.

### (Selection Unit 145)

Based on the design information received by the input unit 141, the attribute information stored by the storage unit 120, and the operation information acquired by the operation information acquisition unit 143, the selection unit 145 selects, from the plurality of processing devices 50, and has a function of selecting the processing apparatus 50 that performs manufacturing based on the information. Specifically, for example, the selection unit 145 calculates the structure of the product based on the design information. The product structure is, for example, a polygon based on three-dimensional CAD data indicated by design information. Then, for example, the selecting unit 145 refers to the attribute information and selects the processing device 50 having the manufacturing ability capable of manufacturing the calculated structure and satisfying the price condition. Further, the selection unit 145 selects the processing apparatus 50, which is free from the operating state and can satisfy the condition of the delivery date, by referring to the operation information among the selections made in this way. Hereinafter, various functions of the selection unit 145 will be described.

For example, the selection unit 145 selects the processing apparatus 50 capable of manufacturing based on the design information based on the manufacturing capability information corresponding to the material indicated by the des i gn information. More specifically, the selection unit 145 selects a processing device 50 capable of manufacturing the material indicated by the design information, and has a required ability, which is an ability required for manufacturing a structure in which the manufacturing ability of the material is calculated from the design information and selects the processing apparatus 50 satisfying the following cond i t i on. For example, when the minimum thickness of the structure calculated from the design information is greater than the minimum thickness of the manufacturing ability and the maximum thickness of the structure calculated from the design information is thinner than the maximum thickness of the manufacturing ability, the selection unit 145 selects the manufacturing It is judged that the ability meets the required ability. On the other hand, when the size of the product calculated from the design information exceeds the maximum processable size indicated by the manufacturing ability, the selection unit 145 determines that the manufacturing ability does not satisfy the required ability. According to this function, for example, the user is less troublesome in investigating the processing apparatus 50 that can be manufactured based on the design information by himself or searching for a processing company.

For example, the selection unit 145 calculates an estimated price based on price information (that is, a unit price) corresponding to the material indicated by the design information. For example, the selection unit 145 selects, as the attribute indicated by the design information, the price of the entire structure calculated from the design information by the unit price per unit amount indicated by the attribute information of the selected processing device 50 and calculates the price adding the personnel expenses per case shown as the estimated price. Other expenses such as shipping fee and insurance fee may be added. Campaign discounts and the like may also be applied. According to this function, for example, the user can easily know the cost required for manufacturing. The selecting unit 145 may select a plurality of processing apparatuses 50 to calculate a plurality of estimated prices, and in this case, the user can easily make a phase estimation.

For example, the selection unit 145 selects a desired price or a short delivery condition included in the design information. At least one of them is prioritized. Normally, the selection unit 145 selects the processing apparatus 50 that is cheaper than the desired price and can be manufactured and delivered earlier than the desired delivery date. However, depending on the operating condition, the processing apparatus 50 that can satisfy the price condition cannot satisfy the delivery term condition, and conversely, in the processing apparatus 50 that can satisfy the delivery date condition, the case where the price condition cannot be satisfied is there. In such a case, the selection unit 145 gives priority to either the price condition or the delivery date condition, and selects the processing apparatus 50 that satisfies one of them. Which condition should be prioritized may be decided arbitrarily by the selection unit 145 or an instruction may be included in the design information. Besides, the server 10 may notify the user that it is difficult to satisfy the cond i t i on, and the user may be instructed wh i ch cond i t i on should be pr i or i t i zed. According to this function, for example, the user desires because of the circumstances such as the busy season of the factory 30. In case it is difficult to manufacture under conditions that compromise the conditions, give priority to manufacturing it becomes possible. Further, for example, the user can set a delivery date earlier than usual by paying the express fee. The server 10 may instruct the process i ng dev i ce 50 to interrupt in response to such a request for a short delivery date.

For example, the selection unit 145 selects, based on data indicating the shape of the product included in the design information, do you calculate the structure of the product and have a structure that can be manufactured using support materials or not. The support material is, for example, a member that supports a material in the middle of stacking and prevents falling or deformation in a 3D printer. It is desirable that the support material be removed after completion of manufacturing or at the stage where there is no risk of falling or deforming. For this reason, for example, the selection section 145 may be structured such that it is desirable to use a support material and a hollow closed structure such as a box shape or a sphere shape, which is difficult to remove the support material, a structure that cannot be manufactured using a support material. On the other hand, the selection unit 145 determines that the structure hav i ng a hole capable of remov i ng the support member is a structure that can be manufactured using the support material. In addition to the presence or absence of a hollow and closed structure, it may be determined whether or not the structure can be manufactured using a support material according to various criteria. According to this function, for example, it is possible to notify the user by filtering the product that cannot be manufactured us i ng the support material at the design information stage, or to notify the user who is not supposed to use the support material in the first place, it is possible to recognize that the support material should be used.

The selection unit 145 may have a function of correcting the design information. For example, the selection unit 145 may modify the requirement required for manufactur i ng the structure calculated from the design information by, for example, modifying the portion that is too thin to be thick, and thinly correcting the portion that is too th i ck, or the like. In addition, the selection unit 145 may change the material, for example, to make the accuracy rough in order to satisfy the condition of the desired price or the delivery date included in the design information. According to this function, for example, it is possible for a user to receive modifications that make it possible to manufacture at a lower cost and at a faster speed by relaxing the unintentionally increased demand capability.

### (3-2) Manufacturing control unit 150

The manufacturing management unit 150 has a function of managing the manufacturing process in the factory 30. For example, first, the manufacturing management unit 150 generates processing instruction information including identification information and design information of the processing apparatus 50 selected by the selection unit 145. This processing instruction information may be generated, for example, as a result of notifying the estimation information by the notifying unit 144, triggering that the consent of the user is obtained. Then, the manufacturing management unit 150 transmits the generated processing instruction information to the management device 40 that manages the processing device 50 selected by the selection unit 145. The manufacturing management unit 150 may manage the progress in the processing apparatus 50 and manage the shipping process to the user after completion of the product.

Besides, the manufacturing management unit 150 may perform various kinds of money processing. For example, the manufacturing management unit 150 may make a deposit from the user or payment to a processor. In addition, the manufacturing management unit 150 may refund to the user in response to a cancellation request or the like. An estimated price is calculated based on the corresponding price information (that is, the unit price). For example, the selection unit 145 selects, as the attribute indicated by the design information, the price of the entire structure calculated from the design information by the unit price per unit amount indicated by the attribute information of the selected processing device 50 and calculates the price adding the personnel expenses per case shown as the estimated price. Other expenses such as shipping fee and insurance fee may be added. Campaign discounts and the like may also be applied. According to this function, for example, the user can easily know the cost required for manufacturing. The selecting unit 145 may select a plurality of processing apparatuses 50 to calculate a plurallity of est i mated prices, and in this case, the user can easily make a phase estimation.

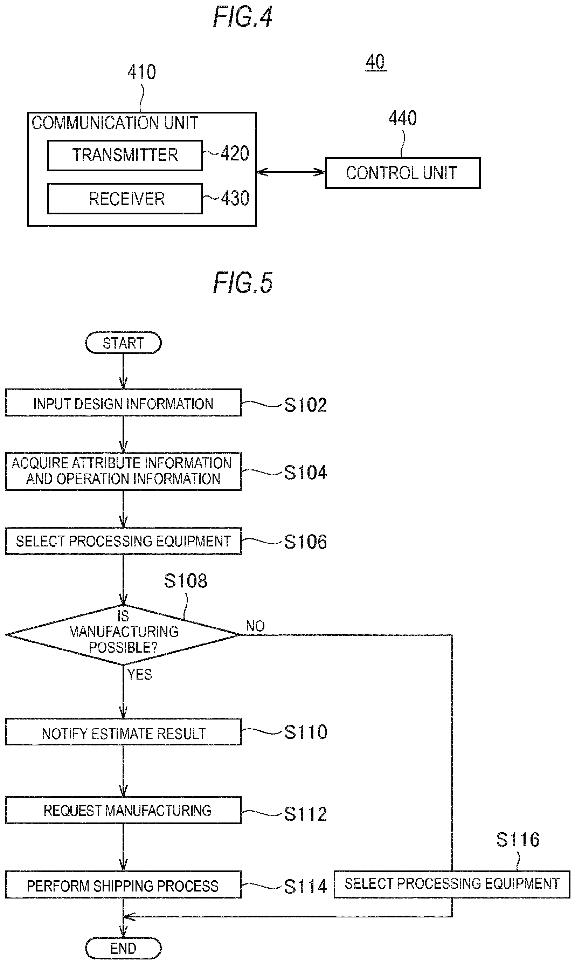

An example of the configuration of the server 10 according to the present embodiment has been described above. Next, with reference to FIG. 4, an example of the configuration of the management apparatus 40 according to this embodiment will be described.

### <4. Configuration example of management apparatus>

FIG. 4 is a block diagram showing an example of a logical configuration of the management apparatus 40 according to this embodiment. As shown in FIG. 4, the management device 40 includes a communication unit 410 and a control unit 440.

### (1) Communication unit 410

The communication unit 410 is a communication module for exchanging data with other devices by wire / wireless. The communication unit 410 directly or indirectly communicates with an external device using, for example, a LAN, Wi-Fi (registered trademark), a telephone line, a broadband network or the like. The communication unit 110 communicates with one or more processing apparatuses 50 in the server 10 and the factory 30. As shown in FIG. 4, the communication unit 410 functions as the transmission unit 420 and the reception unit 430.

### (1-1) Transmitter 420

The transmission unit 420 transmi ts operation information and attributes of at least one processing device 50 in the factory 30 so that the server 10 can select the processing device 50 that performs manufacturing based on design information from the plurality of processing devices 50 and transmits the information to the server 10. For example, the transmission unit 420 may periodically / periodically transmit at least one of the operation information and the attribute information to the server 10, or may transmit the request in response to a request from the server 10. Besides, the transmitting unit 420 may transmit at least one of the operation information and the attribute information to the server 10 in response to the occurrence of an event such as a trigger at which the new processing device 50 is introduced.

### (1-2) Reception unit 430

The receiving unit 430 has a function of receiving instruction information (ie, processing instruction information) instructing to perform manufacturing based on design information from the server 10. The reception unit 430 outputs the received processing instruction information to the control unit 440.

### (2) Control unit 440

The control unit 440 functions as an arithmetic processing unit and a control unit, and controls the overall operation in the management apparatus 40 accord i ng to var i ous programs. The control unit 440 is realized by an electronic circuit such as a CPU, a microprocessor, or the like. Note that the control unit 440 may include a ROM for storing programs to be used, computation parameters, and the like, and a RAM for temporarily storing appropriately changing parameters and the like.

The control unit 440 according to the present embodiment controls the communication unit 410 to transmit the operation information and the attribute information to the server 10. Further, the control unit 440 causes the processing device 50 to process the product by transferring the process i ng instruction information to the process i ng device 50 indicated by the identification information included in the processing instruction information received from the server 10. The control unit 440 may manage the progress in the processing apparatus 50 and report the information indicating the progress as appropriate to the server 10. Further, the control unit 440 may perform a shipping process to the user after completion of the product.

An example of the configuration of the management apparatus 40 according to the present embodiment has been described above. Subsequently, with reference to FIG. 5, an operation process of the manufacturing system 1 according to the present embodiment will be described.

### <5. Operation processing example>

FIG. 5 is a flowchart showing an example of the manufacturing process by the manufacturing system 1 according to the present embodiment.

As shown in FIG. 5, first, in step S 102, the server 10 inputs design information. For example, the input unit 141 receives the design information input by the user to the user device 20 from the user device 20 via the communication unit 110.

Next, in step S104, the server 10 acqu i res the attr i bute i nformat i on and the operat i on information. For example, the attribute information acquiring unit 142 refers to the storage unit 120 and acquires attribute information of the plurality of processing apparatuses 50. Further, the operation information acquiring unit 143 acquires the operation information of the processing device 50 via the management device 40.

Then, in step S106, the server 10 selects a processing apparatus. For example, firstly, the selection unit 145 calculates the structure of the product based on the design information. Then, the selecting unit 145 selects the processing device 50 that has the manufacturing ability capable of manufacturing the calculated structure and sat i sf i es the price cond i t i on and that has a vacant state in the operat i ng state and can satisfy the condition of the delivery date with reference to the attribute information and the operation information. The selection unit 145 may calculate the est i mated pr i ce and the delivery date. In addition, the selecting unit 145 may take into consideration the use of the support material, modify the design information, or alleviate at least one of the conditions of the price or the delivery date.

Next, in step S108, the server 10 determines whether or not the product indicated by the design information can be manufactured. For example, when the selection of one or more processing apparatuses 50 succeeds in step S106, the estimation processing unit 140 determines that manufacturing is possible. On the other hand, the est i mat i on processing unit 140 determines that manufacturing is impossible when there is no processing device 50 successfully selected in step S106.

When it is determined that manufacture is possible (S108 / YES), in step S110, the server 10 notifies the estimation result. For example, the selection unit 145 notifies the estimation information indicating the estimated price and the delivery date in the case where the manufacturing was made by the processing device 50 selected by the selection unit 145, to the user device 20 that is the transmission source of the design information.

Next, in step S112, the server 10 requests manufacturing. For example, with the agreement from the user as a trigger, the manufactur i ng management unit 150 generates processing instruction information including the identification information of the processing apparatus 50 and the design information selected by the selection unit 145, and manages the processing apparatus 50 to the management apparatus 40. As a result, in the processing apparatus 50 selected by the selection unit 145, processing based on the design information is started.

Thereafter, in step S114, the server 10 performs a shipping process. For example, when the manufacturing management unit 150 receives from the management device 40 a notification of the completion of the manufacturing in the processing device 50, it instructs the delivery company or instructs the processing company to pack the product. As a result, the product completed in the processing apparatus 50 is delivered to the user.

When it is determined that manufacturing is impossible (S108 / NO), in step S116, the server 10 performs a canceling process. For example, the notification unit 144 notifies the user that manufacture is impossible. If payment has already been made, the server 10 performs a refund process.

Although the preferred embodiments of the present invention have been described in detail with reference to the accompanying drawings, the present invention is not limited to such examples. It is obvious that those skilled in the art to which the present invention belongs can make various modifications or modifications within the scope of the technical idea described in the claims, and these are naturally understood to belong to the technical scope of the present invention.

It should be noted that the series of processing by each device described in this specification may be realized by using software, hardware, or a combination of software and hardware. The program constituting the software is stored in advance in, for example, a storage medium (non-transitory media) provided inside or outside each device. Each program is read into the RAM, for example, when executed by a computer, and executed by a processor such as a CPU.

In addition, each device described in this specification may be formed as a single device, or a part or the whole may be formed by separate devices. For example, among the functional configuration examples of the server 10 shown in FIG. 2, the estimation processing unit 140 and the manufacturing management unit 150 may be separately provided in a device such as a server connected via a network or the like. Further, these functional configurations may be included in the management device 40, for example.

Also, the processes descr i bed with reference to flowcharts in this specification are not necessarily executed in the order shown. Some processing steps may be executed in parallel. Also, additional processing steps may be employed and some processing steps may be omitted.

## Claims

1. An information processing apparatus including:
an input unit that accepts an input of design information;
a storage unit that stores attribute information of a plurality of processing apparatuses;
an acquisition unit that acquires operat ion information indicating an operation state of the plurality of processing apparatuses;
a selection unit that, on the basis of the design information received by the input unit, the attribute information stored in the storage unit, and the operation information acquired by the acquisition unit, selects a processing apparatus from the plurality of processing apparatuses to perform the manufacturing based on the design information.

2. The information processing apparatus according to claim 1, wherein the attribute information includes manufacturing ability information indicating thickness, precision, and size that can be manufactured by the processing apparatus for each material, and the selection unit selects, based on the manufacturing capability information corresponding to the material indicated by the design information, the processing apparatus capable of manufacturing based on the design information.

3. The information processing apparatus to claim 2, wherein the design information includes conditions of desired price and delivery date, and the selection unit selects at least one of a desired price or a delivery date condition included in the design information.

4. The information processing apparatus to claim 3, wherein the design information includes data indicating the shape of the product, and the selection unit calculates the structure of the product based on the data indicating the shape of the product included in the design information and determines whether or not the structure is capable of manufacturing using the support material.

5. The information processing apparatus to claim 3, comprising a notification unit that notifies estimate information indicating an estimated price and a delivery date in the case where the processing device selected by the selection unit is manufactured.

6. The information processing apparatus to claim 5, wherein the attribute information includes price information including material cost and labor cost for each material, and the selection unit calculates the estimated price based on the price information corresponding to the material indicated by the design information.

7. A computer program including:
a transmission unit that transmits the operation information and the attribute information of at least one of the processing apparatuses to the server apparatus so that the server apparatus can select the processing apparatus that performs manufacturing based on the design information from the plurality of processing apparatuses.
